# EUROPEAN PATENT APPLICATION

(11) **EP 0 997 434 A1**
(43) Date of publication of application: **03.05.2000**
(21) Application number: 99901606.6
(22) Date of filing: 04.02.1999
(51) Int. Cl.: C01B 37/00, C01B 37/02, C01B 39/48, B01J 29/04, B01J 29/89

(54) **SYNTHESIS OF LARGE PORE ZEOLITES AND ZEOTYPES**

(30) Priority: 06.02.1998 ES 9800269
(71) Applicant: CONSEJO SUPERIOR DE INVESTIGACIONES CIENTIFICAS, 28006 Madrid (ES); UNIVERSIDAD POLITECNICA DE VALENCIA, 46022 Valencia (ES)
(72) Inventor: CAMBLOR FERNANDEZ, Miguel-Angel, 46022 Valencia (ES); CORMA CANOS, Avelino, 46022 Valencia (ES); VILLAESCUSA ALONSO, Luis-Angel, 46022 Valencia (ES); DIAZ CABANAS, M Jose, 46022 Valencia (ES)
(74) Representative: Ungria Lopez, Javier
(86) International application number: ES9900032
(87) International publication number: WO9940026

(57) **Abstract**

The invention relates to methods for the synthesis of large pore zeolite materials which are related structurally with the Beta zeolite, characterized by the relatively low pH of the synthesis medium and the use of F⁻ anions as mineraliser; it also relates to the materials thus obtained which are characterized by their very high thermal stability, low concentration of defects SiO⁻ or SiOH, wide range of chemical composition, large pore and because their calcination enables to obtain the acid form without the use of cationic exchange process. Although said materials are related with Beta zeolite, they present occasionally substantial differences with respect to the Beta zeolite. Also claimed is the use of the material obtained in catalytic process of transformation of hydrocarbons and in oxidation process. The method comprises heating at 363-473K a reaction mixture which contains a source of at least one tetravalent element T(IV), optionally a source of an element T(III), optionally H₂O₂, a structure-director organic cation, a source of anions F⁻ and water; the presence of alkaline cations is not necessary.

## Description

### TECHNICAL FIELD

### BACKGROUND

Zeolites are microporous crystalline materials with a variable composition characterized by a crystalline lattice of tetrahedrons TO₄ (wherein T normally represents Si and Al, but it can also represent Ti, Ge, B, Ga,..., in which case they are known as zeotypes) that share all of their vertexes giving rise to a three-dimensional structure that contains channels and/or cavities with molecular dimensions. When some of the T atoms have an oxidation state lower than +4, the crystalline lattice formed has negative charges that are compensated by the presence in the channels or cavities of organic or inorganic cations. Organic molecules, salts and H₂O may also be lodged in said channels and cavities, therefore, the chemical composition of zeolites can generally be represented by the following empirical formula:

X(M₁/ₙXO₂):yYO₂:zR:wH₂O

wherein M is one or several organic or inorganic cations with a +n charge; X is one or several trivalent elements; Y is one or several tetravalent elements; and R is one or several organic substances or a salt. Although the nature of M, X, Y and R and the values of x, y, z and w can, in general, be varied by means of post-synthesis treatments, the chemical composition of a zeolitic material (as synthesized or after calcination) has a characteristic range of each zeolite or zeotype and method of obtainment thereof.

On the other hand, a zeolitic material is also characterized by its crystalline structure, that defines its system of channels and cavities and gives rise to a specific X-ray diffraction pattern. In this way, zeolites and zeotypes differ from each other by their range of chemical composition plus their X-ray diffraction patterns. The intensity of the diffraction lines, by reference to a suitable standard sample, can be used as an indication of "crystallinity". This concept can refer to the amount of matter of a crystalline phase in a solid that also contains other phases (for example, an amorphous solid) or to the structural "perfection" of the solid. The more or less perfect crystalline structure as well as the chemical composition also determine the physicochemical properties of each zeolite or zeotype and the applicability thereof in different industrial processes. Other characteristics of the zeolite that can have a big influence in the applicability thereof are the crystal size and the presence of reticular defects. These properties as well as the chemical composition of the material can be highly dependent on the preparation method and/or subsequent treatments.

Beta zeolite (US Pat. 28,341) is a microporous crystalline material characterized by its crystalline structure, that determines a specific X-ray diffraction pattern and a unique channel system, and by its chemical composition that may be represented by the empirical formula:

[xNa, (1-x)TEA]AlO₂.ySiO₂.wH₂O

wherein x<1, y=5-100, w is up to around 4 and TEA represents the tetraethylammonium cation. In general, the Beta zeolite is synthesized in the presence of alkaline cations and the crystalline product normally has a crystal size between 0.1 and 1 µm. So that the zeolite has adsorption properties it is necessary for the synthesized material to be calcined in order to decompose the tetraethylammonium cation and to release the intrazeolitic vacuum volume. Normally, this calcination process is accompanied by a considerable loss of crystallinity and by a dealuminization process. The loss of crystallinity may be due to a partial amorphization process of the material, that involves a loss of the specific properties of the zeolite in catalytic processes. It may also be due to a big increase of the concentration of reticular defects (Si-OH type), which affects the physicochemical properties of the material and its stability in subsequent thermal processes (such as those that are required in order to regenerate a catalyst in different processes of transformation of hydrocarbons, such as catalytic cracking of hydrocarbons). The dealuminization process entails the loss of Al of the lattice and, therefore, of the corresponding Bronsted acid centers, and gives rise to types of extra-lattice aluminum, that may be of very different types and may have important consequences on the activity of the material. If the synthesis is carried out in the presence of alkaline cations it is necessary to carry out cation exchange in order to obtain the acid form, active in catalytic processes of transformation of hydrocarbons.

A zeotype isomorphous to Beta zeolite may also be synthesized with Ti atoms in the lattice, in accordance with Spanish patent 2037596. In this case, the zeotype may be used as a catalyst in selective oxidation processes or organic products using H₂O₂ or organic hyperoxides and peroxides as the oxidizing agent. In this case, the chemical composition of the material, in its anhydrous and calcined state, may be represented by the formula

X(HXO₂):yTiO₂:SiO₂

wherein X is a trivalent cation (Al, Ga, B, ...) and y may have values between 0 and 0.1.

### DESCRIPTION OF THE INVENTION

The present invention refers to a method of synthesis of large pore zeolitic materials structurally related to Beta zeolite, characterized in the low pH of the synthesis medium and the use of F⁻ anions as the mineralizing agent, and to the materials obtained, characterized in a high thermal stability, a low concentration of SiO⁻ OR SiOH defects, a broad range of chemical composition and in that its calcination makes it possible to obtain the acid form without resorting to cation exchange processes. That is to say, the material in the calcined form responds to the empirical formula

X(HXO₂):yTO₂:SiO₂

wherein T is a tetravalent element other than Si (Ti, V...); X is a trivalent element (Al, Ga, Fe, B, Cr,...), x has a value lower than 0.2. It may likewise be 0 and may have values between 0 and 0.1. It also claims the use of the materials obtained in catalytic processes of the transformation of hydrocarbons and functionalized hydrocarbons. When y is not zero the material (Ti-Beta, V-Beta, etc.) is also claimed in the selective oxidation processes of organic compounds using H₂O₂ or organic peroxides or hydroperoxides.

Such a preparation method is based on heating at temperatures of 363-473K, preferably 403-423K, of a reaction mixture that contains a silica source (amorphous silica, colloidal silica, silica gel, tetraalkylorthosilicate, etc., preferably amorphous silica or tetraethylorthosilicate), optionally an aluminum source (aluminum oxide or hydroxide, another aluminum salt, aluminate of an organic cation or metal aluminum, preferably metal aluminum or aluminum hydroxide) or another trivalent element (Cr, Ga, B, Fe,...), optionally a Ti source (Ti alkoxide or halide, preferably tetraethoxide, tetrapropoxide or); V (such as, for example, vanadyl sulfate) or another tetravalent element, a structure-director organic cation, optionally H₂O₂, a F⁻ anion source and water, avoiding the presence of alkaline cations. The sources of F⁻ anions and of organic cations are chosen in such a way that the final pH, after crystallization has taken place, the pH is in the range of 6 to 12, preferably in the range of 8-10. The composition of the synthesis mixture is characterized by the following molar ratio ranges:
H₂O/SiO₂=4-50, preferably 4-20, more preferably 4-8
SiO₂/X₂O₃=10-∞, preferably higher than 14
Rⁿ⁺/(nSiO₂)=0.125-0.80, preferably 0.15-0.72
HF/SiO₂=0.1-2, preferably 0.1-0.8
SiO₂/TO₂=4-∞, preferably 20-∞
H₂O₂/TO₂=0-50, preferably 0-20
wherein T represents a tetravalent element (Ti, V,...); X a trivalent element (Al, B, Ga, Cr, Fe,...) and Rⁿ⁺ is an organic cation with a +n charge.

An important difference of this method of synthesis with respect to prior ones is the use of new structure-director organic cations, as well as the already known tetraethylammonium. Among the new organic cations used, are the ones indicated hereinafter: 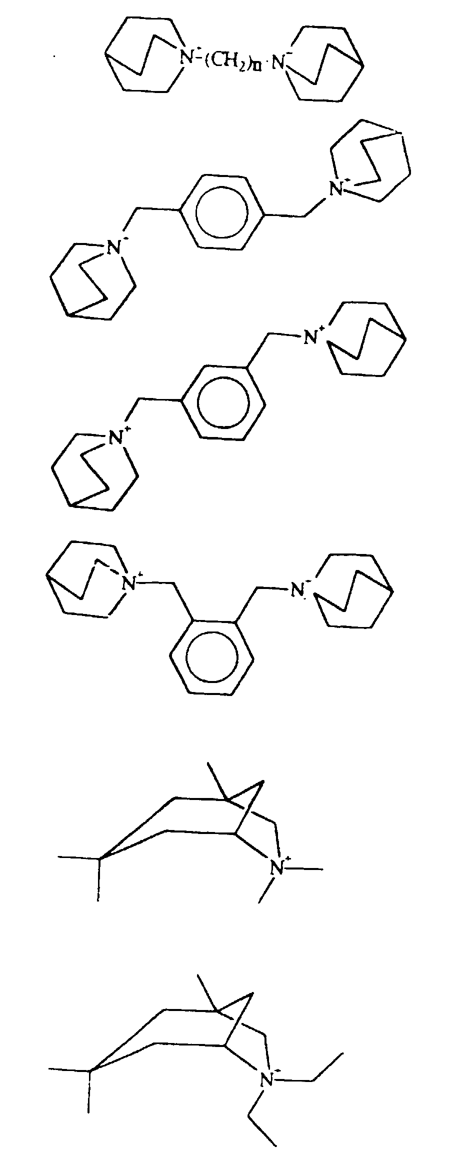 In order to enhance crystallization it may be convenient, although not necessary, to add to the reaction mixture Beta zeolite crystals so that they act as seeds. These crystals may be added as a dry solid, a suspension of crystals in a suitable liquid or as a preorganized gel. A particularly suitable planting for Beta zeolite is described in our patent application P9501552.

Unlike other methods of synthesis, that require centrifuging in order to separate the zeolite, the method object of the present invention makes it possible to separate the zeolite from its mother liquors by filtration. As a result materials structurally related to Beta zeolite are obtained with a very high crystallinity that may be calcined in order to eliminate the occluded organic material with a low or nil loss of crystallinity.

Another important difference with regard to other methods of synthesis of zeolite or zeotypes structurally related to Beta zeolite reside in the high yield in the inclusion of Al and Si in the zeolite when the process of the present invention is followed in its aluminosilicate form. Said yield may be defined as the weight of Al or Si in the zeolite divided by the weight of Al or Si in the synthesis mixture and multiplied by one hundred. In accordance with literature (M.A. Camblor et al., Zeolites, 1991, 11, 792) the inclusion of Si in the Beta zeolite is typically lower than 60% and drastically reduces upon increasing the Si/Al ratio, which results in the impossibility of exceeding the ratio limit Si/Al=100. According to the method of the present method, the yield in the inclusion of Si as well as Al is, in all cases, higher than 90%, which makes it possible to exceed the cited Si/Al ratio limit. It is even possible to obtain purely siliceous zeolite and zeotypes containing Ti and/or V without Al or another trivalent element. This high yield in the inclusion of Si and Al in the zeolite implies an outstanding advantage of the method of the present invention, since it permits a reduction of the production cost of the zeolite and a considerably improvement in the need of treatment and/or recycling of the residual waters.

The solid product obtained has a diffraction patterns (CuKα radiation, Fig. 1, 2 and 3) essentially coinciding with that of Beta zeolite (US Pat. 28,341), although, in general, a greater definition of the diffraction peaks is observed. The structure proposed for this zeolite is an intergrowth of two or more polymorphs and the obtainment of different materials is theoretically possible in terms of the nature of the polymorphs present, their relative concentration and the size of the microdomains that contain a single polymorph (Newsam, J.M., Treacy, M.M.J., Koetsier, W.T., de Gruyter, C.B., *Proc*. *R. Soc. Lond*., 1988, 420, 375). The differences existing between the diffractograms of the samples obtained using different templates (Fig. 1 to 5) suggest the existence of appreciable variations in the nature, relative proportion and/or size of the domains of different polymorphs in the materials object of the present invention. The high crystallinity of the materials is evidenced when the area of the peaks is measured and compared with a high crystallinity Beta zeolite obtained by other methods, obtaining values equal to or higher than 100%. The better definition and resolution of the peaks may be attributed to the almost total absence of connectivity defects of the Si-O⁻ or Si-OH type, and not only to a large crystal size, since the size is usually in the typical ranges for this zeolite (<4µm, generally <0.5µm).

As to the chemical composition of the zeolite obtained, the method of the present invention allows the synthesis of materials with a variable molar Si/Al ratio in the range 5-∞, always maintaining the high crystallinity. The bottom limit of this range is conditioned by the maximum content in structure-director organic cations that may house zeolitic channels.

The applications of the material obtained by the present method and that are claimed in the present specification are:
- preparation of zeolitic membranes on supports
- catalytic cracking catalyst additive
- active component or additive in light paraffin isomerization catalysts
- hydrocracking catalyst
- gentle hydrocracking catalyst
- deparaffined and isodeparaffined catalyst
- isoparaffin alkylation catalyst with olefins and alkylation of aromatics with olefins and alcohols
- selective oxidation catalyst of organic compounds using H₂O₂ or organic peroxides and hydroperoxides: oxidation of alkanes to alcohols and ketones; oxidation of alcohols to ketones; hydroxylation of aromatics; epoxydation of olefins; oxidation of thioethers to sulfoxides and sulfones; amoxymation of cyclohexanone to cyclohexanoneomixe with NH₃; etc.

### EXAMPLES

1.- This example illustrates the preparation of a pure silica material structurally related to Beta zeolite, using the octamethylenebisquinuclidinium template.
   26.00 g of tetraethylorthosilicate (TEOS) is hydrolyzed in 35.25 g of a 1.77 N octamethylenediquinuclidinium hydroxide solution and 11.25 g of water. It is stirred until complete evaporation of the ethanol produced and 2.60 g of HF (48%, aq) are added. The final composition of the mixture, taking into account the evaporation of water is

   0.25 C₂₂H₄₂N₂(OH)₂): 0.50 HF : SiO₂ : 7.50 H₂O

   The solid is divided up into steel autoclaves provided with an inside Teflon cover, autoclaves which are heated to the crystallization temperature at the same time that they are kept rotating (60 rpm.) Afterwards the autoclaves are cooled and the content thereof is filtered. The solids obtained after 4 days at 175^{º}C, or 4 days at 150^{º}C or 12 days at 135^{º}C are crystalline materials whose X-ray diffraction pattern is similar to that of Beta zeolite. The diffractogram of the solid obtained at 175^{º}C is shown in figure 1.
2.- This example illustrates the preparation of a pure silica material structurally related to Beta zeolite, using α,α'-diquinuclidinium-p-xylene as the template.
   25.62 g of TEOS are hydrolyzed in 64.18g of a 0.96 m solution in OH⁻ of the α,α'-diquinuclidinium-p-xylene template in the hydroxide form, and the mixture is left stirring until complete evaporation of the ethanol is produced. 2.56 g of HF (48%, aq) is added and the resulting mixture is introduced in steel autoclaves provided with an inside Teflon cover.
   The final composition of the gel, taking the water loss by evaporation into account is

   0.25 (p-C₂₂H₃₄N₂(OH)₂): 0.50 HF : SiO₂ : 7.50 H₂O

   The autoclaves are introduced at 175^{º}C and are kept rotating (60 rpm) for 4 days. The solid obtained after filtration of the contents of the autoclave has the X-ray diffractogram of Figure 2.
3.- This example illustrates the preparation of a pure silica material structurally related to Beta zeolite, using α,α'-diquinuclidinium-m-xylene as the template.
   The above process is followed, using this time α,α-diquinuclidinium-m-xylene dihydroxide as the template. The final composition of the gel in this case was

   0.25 (m-C₂₂H₃₄N₂(OH)₂): 0.50 HF : SiO₂ : 7.50 H₂O

   After 5 days of heating with rotation at 175^{º}C a material that has the diffractogram of Figure 3 is obtained.
4.- This example illustrates the preparation of a pure silica material structurally related to Beta zeolite, using α,α'-diquinuclidinium-o-xylene as the template.
   The above process is followed, using this time α,α-diquinuclidinium-o-xylene dihydroxide as the template. The final composition of the gel in this case was

   0.25 (o-C₂₂H₃₄N₂(OH)₂₎: 0.50 HF : SiO₂ : 6.8 H₂O

   After 4 days of heating with rotation at 175^{º}C a material that has the diffractogram of Figure 4 is obtained.
5.- This example illustrates the preparation of a pure silica material structurally related to Beta zeolite, using 1,3,3,N,N pentamethyl-6-azoniumbicyclo [3.2.1.] octane as the template
   21.89 g of TEOS are hydrolyzed in 35.02 g of a 1.49 m solution in OH⁻ of 1,3,3,N,N pentamethyl-6-azoniobicyclo [3.2.1.] octane hydroxide. It is stirred allowing the complete evaporation of the ethanol formed. 2.18 g of HF (48%, aq) are added and the mixture obtained is divided up into steel autoclaves provided with an inside Teflon cover. The final composition of the gel is

   0.5(C₁₂H₂₄NOH) : 0.5 HF : SiO₂ 9.8 H₂O

   The crystallization is carried out at 150^{º}C with rotation of the autoclaves (60 rpm). After 20 days of heating the filtered solid has the diffractogram of Figure 5.
6.- This example illustrates the preparation of a pure silica material structurally related to Beta zeolite, using N,N diethyl-1,3,3-trimethyl-6-azoniumbicyclo [3.2.1.] octane as the template.
   20.80 g of TEOS are hydrolyzed in 35.45 g of a 1.40 m solution in OH⁻ of N,N diethyl-1,3,3-trimethyl-6-azoniumbicyclo [3.2.1.] octane hydroxide. It is stirred allowing the complete evaporation of the ethanol formed. 2.08 g of HF (48%, aq) are added and the mixture obtained is divided up into steel autoclaves provided with an inside Teflon cover. The final composition of the gel is

   0.5(C₁₄H₂₈NOH) : 0.5 HF : SiO₂ 8.9 H₂O

   The crystallization is carried out at 150^{º}C with rotation of the autoclaves (60 rpm). After 21 days of heating the filtered solid has the diffractogram of Figure 6.

## Claims

1. A method of preparation of zeolites and zeotypes with an X-ray diffraction pattern essentially coinciding with those of figures 1-6, characterized in not requiring the presence of alkaline cations in the synthesis mixture and in using F⁻ anions, organic cations and a low pH. The mixture has a composition, in terms of molar ratios, within the ranges
H₂O/SiO₂=4-50, preferably 4-20, more preferably 4-8
SiO₂/X₂O₃=10-∞, preferably >14
Rⁿ⁺/(nSiO₂)=0.125-0.80, preferably 0.15-0.72
F⁻/SiO₂=0.1-2, preferably 0.1-0.8
wherein X is a trivalent element, preferably Al, Rⁿ⁺ is an organic additive with a +n charge and the pH once crystallization has ended is in the range of 6-12, preferably 8-9.5.

2. A method of preparation of zeotypes containing Ti, Cr or V and with an X-ray diffraction pattern essentially similar to those of figures 1 to 4, characterized in not requiring the presence of alkaline cations in the synthesis mixture and in using F⁻ anions and a low pH. The mixture has a composition, in terms of molar ratios, within the ranges
H₂O/SiO₂=4-50, preferably 4-20, more preferably 4-8
TO₂/SiO₂=0-0.25, preferably, 0.01-0.05
SiO₂/X₂O₃=10-∞, preferably 100-∞, more preferably >1000
Rⁿ⁺/(SiO₂)=0.125-0.80, preferably 0.15-0.72
F⁻/SiO₂=0.1-2, preferably 0.1-0.8
H₂O₂/F⁻=0-50, preferably 0-20.
wherein T is Ti, Cr or V, Rⁿ⁺ is an organic additive with a +n charge, X is a trivalent element and wherein the pH once crystallization has ended is in the range of 6-12, preferably 8-9.5.

3. A method of preparation of a zeolite according to claim 1 or a zeotype containing Ti, Cr or V according to claim 2 wherein Beta zeolite crystals are added to the synthesis mixture as crystallization promoters, wherein these crystals may be added as a solid, disperse in a suitable solution or in the form of a partially or totally crystallized gel.

4. A method of preparation of a zeolite according to claim 1, or a zeotype containing Ti, Cr or V according to claim 2, wherein the synthesis mixture contains octamethylenebisquinuclidinium, α,α'-diquinuclidinium-p-xylene, α,α'-diquinuclidinium-m-xylene. α,α'-diquinuclidinium-o-xylene, 1,3,3,N,N pentamethyl-6-azonium-bicyclo [3.2.1.] octane or N,N diethyl-1,3,3-trimethyl-6-azoniumbicyclo [3.2.1] octane cations and is heated to a temperature in the range of 363-473K, preferably 403-423K, in order to produce the crystallization of the material.

5. A zeolite according to claims 1 and 4 wherein the calcination at temperatures in the range of 570-1270K, preferably in the range of 570-870K, produces the elimination of the occluded organic material with losses of crystallinity lower than 20% and giving rise to a zeolite with an acid composition, in its anhydrous state,
x(HXO₂):SiO₂
wherein x has a value lower than 0.2, or likewise zero, and x is a trivalent element.

6. A zeotype containing Ti, Cr or V according to claims 2 and 4, wherein the calcination at temperatures in the range of 570-1270K, preferably in the range of 570-870K, produces the elimination of the occluded organic material with losses of crystallinity lower than 20% and giving rise to a zeolite with a composition, in its anhydrous state
x(HXO₂):yTO₂:SiO₂
wherein T is Ti, Cr or V, and it is in the range of 0-0.1, X is a trivalent element and x is lower than 0.2, or likewise 0.

7. Use of the zeolite of claims 1, 4 and 5 as a catalyst in processes of cracking, hydrocracking, gentle hydrocracking of hydrocarbons and/or functionalized hydrocarbons, hydroisomerization of direct distillation, deparaffined and isodeparaffined gasolines, alkylation of isoparaffins and olefins and alkylation of aromatics with olefins and alcohols.

8. Use of zeotypes containing Ti, Cr or V according to claims 2, 4 and 5 as a catalyst in selective oxidation processes of organic compounds using H₂O₂ or organic peroxides and hydroperoxides.
